Europäisches Patentamt

European Patent Office

Office européen des brevets

(19)

(11) Numéro de publication : **0 307 258 B1**

(12) # FASCICULE DE BREVET EUROPEEN

(45) Date de publication du fascicule du brevet :
**18.12.91 Bulletin 91/51**

(51) Int. Cl.⁵ : **G01N 29/04**

(21) Numéro de dépôt : **88401955.5**

(22) Date de dépôt : **28.07.88**

(54) **Procédé et dispositif de caractérisation tissulaire par réflexion d'impulsions ultrasonores à large bande de fréquences, transposition du spectre de fréquence des échos dans une gamme audible et diagnostic par écoute.**

(30) Priorité : **14.08.87 FR 8711828**

(43) Date de publication de la demande :
**15.03.89 Bulletin 89/11**

(45) Mention de la délivrance du brevet :
**18.12.91 Bulletin 91/51**

(84) Etats contractants désignés :
**AT BE CH DE GB IT LI NL SE**

(56) Documents cités :
**EP-A- 0 100 234**
**US-A- 3 887 896**
**US-A- 4 105 018**
**US-A- 4 583 406**
**US-A- 4 658 827**

(73) Titulaire : **EDAP INTERNATIONAL**
**Z.I. le Parc aux Vignes Rue des Vieilles Vignes**
**F-77200 Croissy Beaubourg-Marne La Vallee**
**(FR)**

(72) Inventeur : **Dory, Jacques**
**91, rue des Molveaux**
**F-77450 Coupvray Esbly (FR)**

(74) Mandataire : **Marquer, Francis et al**
**Cabinet Moutard 35, Avenue Victor Hugo**
**F-78960 Voisins le Bretonneux (FR)**

## Description

Il est connu du document EP-A-0100234 de transmettre des impulsions ultrasonores à haute fréquence porteuse à un tissu biologique et de mémoriser le signal électrique reçu à haute fréquence par le transducteur après réflexion dans le tissu. Le spectre de cet écho a subi par rapport à celui de l'impulsion émise, des modifications significatives et son analyse de Fourier permet d'obtenir une information sur la structure du tissu (par exemple d'identifier la nature d'une tumeur) en particulier par comparaison avec le spectre des échos obtenus dans des tissus différents ou en des points d'observation échographique différents. L'inconvénient de ce procédé est la complexité des appareillages nécessaires pour effectuer une analyse de Fourier rapide et la difficulté d'interprétation visuelle des résultats.

L'invention propose de transmettre en différents points du tissu à caractériser des signaux ultrasonores à haute fréquence porteuse et d'inscrire en mémoire les signaux électriques à haute fréquence reçus après réflexion dans le tissu et est caractérisé par la lecture des informations ainsi mémorisées à une vitesse suffisamment faible, par rapport à la vitesse d'inscription, pour que la bande de fréquence des signaux résultants de cette lecture soit comprise dans une gamme audible et par un diagnostic par écoute desdits signaux. Il est à noter que le document US-A-3887896, qui concerne la détection sous-marine d'objets, décrit un procédé semblable.

L'invention sera mieux comprise à l'aide de la description ci-après.

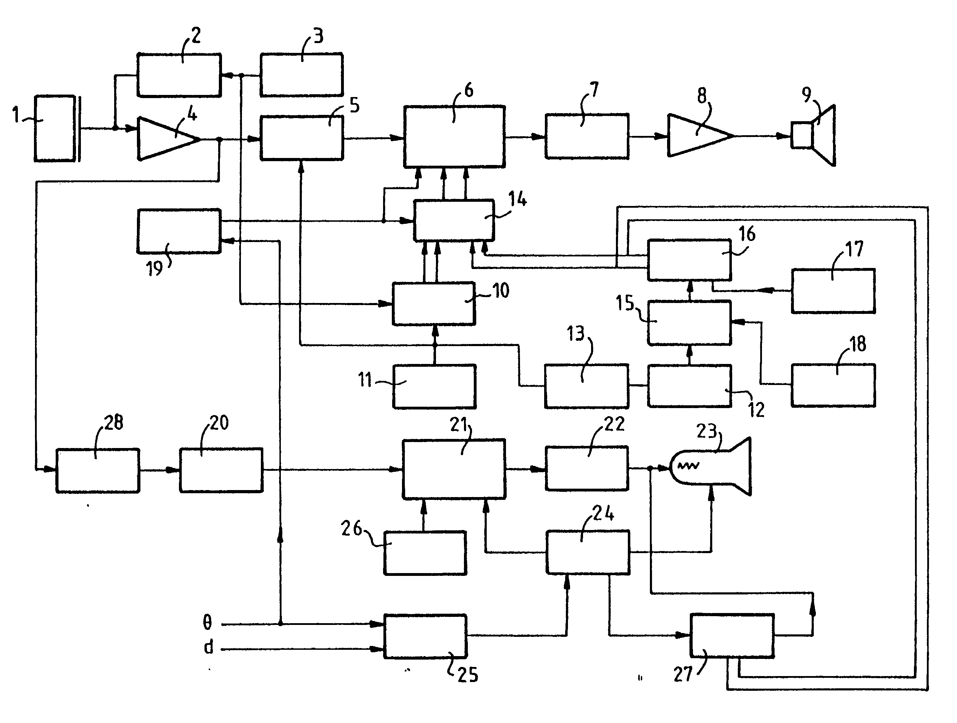

La figure unique du dessin annexé est le schéma de principe d'un dispositif d'échographie à transposition de fréquence conforme à un mode d'exécution préféré de l'invention.

Un transducteur 1 est connecté, de façon classique, à un émetteur 2 d'impulsions à haute fréquence, lui-même commandé par une horloge 3, et à un amplificateur à haute fréquence 4 de réception des échos.

A la sortie de cet amplificateur est connecté un convertisseur analogique-numérique 5 suivi d'une mémoire 6 à la sortie de laquelle sont connectés un convertisseur numérique-analogique 7 et un amplificateur 8 qui attaque un haut-parleur 9 ou des écouteurs.

La mémoire est adressée, pour l'acquisition, par un compteur 10 piloté par une horloge 11 et, pour la lecture, par un compteur 12 piloté par l'horloge 11 à travers un diviseur de fréquence 13. Les signaux d'adressage engendrés par les compteurs 10 et 12 sont transmis à l'entrée de commande d'adressage de la mémoire 6 par un multiplexeur d'adressage écriture-lecture 14 dont une entrée est directement reliée à la sortie du compteur 10 et une autre entrée est reliée à la sortie du compteur 12 par l'intermédiaire d'un dispositif 15 sélecteur d'une zone d'adressage, suivi d'un additionneur 16 agencé pour ajouter à la sortie numérique du dispositif 15 un nombre variable fixé par un organe 17. Le dispositif 15 est lui-même commandé par un organe de réglage 18.

L'horloge 10 pilote par ailleurs le convertisseur 5, tandis que l'horloge 3 commande le déclenchement du compteur 9 pour l'acquisition.

Un commutateur 19 commande le positionnement du multiplexeur 14 et de la mémoire 6 alternativement en écriture ou en lecture, de façon telle que l'inscription en mémoire se fasse pendant la durée d'une ligne de balayage et la lecture pendant la durée de balayage des 5 000 ou 10 000 lignes suivantes, comme on l'expliquera dans la suite.

De préférence, le dispositif qui vient d'être décrit est associé à un échographe standard, par exemple à balayage sectoriel, qui comprend les organes 1 à 4 et une mémoire supplémentaire tampon d'image 21 reliée à la sortie de l'amplificateur 4 par l'intermédiaire d'un détecteur 28 et d'un convertisseur analogique-numérique 20. La mémoire 21 restitue l'information qui y est stockée à un convertisseur numérique-analogique 22, lequel attaque l'électrode de commande de luminosité d'un tube cathodique 23.

De manière connue en soi, un organe de commande 24 fournit les signaux d'adressage d'écriture et de lecture de la mémoire et les signaux de commande de balayage de l'écran du tube cathodique.

L'adressage d'écriture se fait à la cadence de balayage du faisceau ultrasonore, l'appareil d'échographie fournissant, de manière connue en soi, les informations θ et d qui correspondent, dans le cas d'un balayage sectoriel, respectivement à la position angulaire instantanée du faisceau et à la distance de la surface émissive du transducteur à la surface réfléchissante, à un circuit 25 qui les convertit en adresses de mémoire. Un circuit 26, relié à l'entrée lecture-écriture de la mémoire 21, assure la cadence d'alternance souhaitée entre la lecture et l'écriture.

Les adresses de lecture fournies par l'additionneur 16 sont comparées aux adresses de lecture fournies par le circuit 24 dans un comparateur 27. En cas de coïncidence, ce dernier envoie un signal de surbrillance au tube cathodique 23.

La réalisation pratique de tous les circuits qui viennent d'être décrits est à la portée de l'homme de l'art.

On va maintenant décrire le fonctionnement du dispositif.

On supposera que le contenu de la mémoire 21 est de $256 \times 512$ mots, pour la visualisation de 256 lignes de 512 points sur l'écran du tube 23. Le fonctionnement de l'échographe classique 1-2-3-4-20 à 26 est bien connu : l'image complète de l'organe testé, lequel subit un balayage angulaire du faisceau d'ultrasons, est stockée dans la mémoire 21 pendant les périodes d'acquisition et visualisée sur l'écran pendant les périodes de lecture.

On supposera que la haute fréquence d'émission est 5 MHz et que le sondage s'effectue jusqu'à une profondeur de 150 mm par exemple.

Les échos ultrasonores comporteront des composantes pouvant aller au maximum jusqu'à une fréquence de 10 MHz et, pour mettre en mémoire de telles composantes, la fréquence d'échantillonnage devra être de 20 MHz (fréquence de l'horloge 11, beaucoup plus élevée que celle de l'horloge 3, qui est par exemple comprise entre 2 et 8 KHz).

En prenant une mémoire 6 de $2^{12}$ = 4096 mots par exemple, on peut y stocker l'information à haute fréquence reçue pendant les 204,8 µs qui suivent l'impulsion d'émission, ce qui correspond à peu près à la profondeur désirée, donc à une ligne complète de balayage.

Le diviseur 13 divise la fréquence de l'horloge 11 par un taux compris entre 5 000 et 10 000 par exemple, si bien que le spectre de fréquences du signal de sortie de la mémoire sera ramené à 1 à 2 Kz ou 0,5 à 1 Kz suivant le taux de division.

De telles fréquences sont audibles et l'oreille humaine est parfaitement capable d'apprécier, de façon qualitative, de très faibles modifications d'un spectre de fréquences audibles.

L'ensemble 15-18 peut être réalisé simplement sous la forme d'un commutateur à plusieurs positions qui met à la masse une ou plusieurs des sorties de poids fort du compteur 12, de façon à obtenir seulement les 128,256 ou 512 premières adresses. Dans l'exemple décrit, on positionnera cet ensemble sur 512, de façon que la portion de ligne lue en mémoire 6 ait le même nombre de mots que le contenu d'une ligne complète de la mémoire 21.

L'addition, à chaque adresse ainsi sélectionnée, d'un nombre fixé par l'organe 17, permet de positionner à volonté la fenêtre d'adressage sélectionnée dans l'une quelconque de huit tranches de la mémoire 6, contenant chacune l'information correspondant à 1/8 de ligne.

Pour une position donnée de la fenêtre d'adressage, le comparateur 27 compare en permanence les adresses de lecture des mémoires 6 et 21 et déclenche ainsi la surbrillance d'un huitième de ligne sur l'écran. L'organe 19, à la fin du balayage d'une ligne, commute la mémoire 6 en lecture et la lecture dure par exemple autant que le balayage des 10 000 lignes suivantes, soit deux secondes environ. A la fin de la lecture, l'organe 19, qui reçoit une information de la valeur de θ, attend que le balayage ait atteint la ligne qui suit celle précédemment lue pour recommuter la mémoire 6 en écriture. La réalisation de ce circuit 13 est à la portée de l'homme de l'art et d'autres modes d'exploitation de l'appareil pourraient être envisagés.

## Revendications

1. Procédé de caractérisation tissulaire consistant à transmettre des impulsions ultrasonores à haute fréquence porteuse au tissu biologique à caractériser, à mémoriser les signaux électriques à haute fréquence réfléchis au sein du tissu et à effectuer l'examen des déformations subies par le spectre de fréquences transmis et réfléchi, caractérisé par une transposition de fréquence qui ramène le spectre réfléchi dans la gamme des fréquences audibles et par l'écoute du spectre transposé.

2. Dispositif pour la mise en oeuvre du procédé selon la revendication 1, comportant des moyens (1-2-3) de transmettre au tissu des impulsions ultrasonores à haute fréquence porteuse, des moyens (1-4) récepteurs et convertisseurs des échos en signaux électriques à haute fréquence et des moyens (5-6-10-11-14) de mémoriser lesdits signaux électriques avec une fréquence d'échantillonnage suffisante pour que l'information à haute fréquence qu'ils contiennent soit correctement enregistrée, caractérisé par des moyens (11 à 19) de lire l'information mémorisée à une cadence inférieure à la fréquence d'échantillonnage et telle que le spectre haute fréquence soit transposé dans la gamme des fréquences audibles et par des moyens (7-8-9) de convertir le spectre transposé en un signal sonore.

3. Dispositif selon la revendication 2, comportant en outre un organe détecteur (28) desdits signaux électriques à haute fréquence, des moyens (20-21-24-25-26) de mémoriser les signaux détectés correspondant à une image complète d'une région d'un tissu obtenue par balayage du faisceau ultrasonore transmis et des moyens (22-23-24) de visualisation de l'image mémorisée, caractérisé en ce que lesdits moyens (5-6-11-14) de mémoriser les signaux à haute fréquence sont agencés pour mémoriser l'information correspondant à une ligne de balayage, que lesdits moyens (11 à 19) de lire l'information mémorisée sont agencés pour lire une zone d'adressage sélectionnée de largeur et de position réglables correspondant à une portion déterminée de la ligne de balayage, et que lesdits moyens (20-21-24-25-26) de mémorisation d'une image complète comprennent un comparateur (27) des adresses de ladite zone sélectionnée et des adresses de lecture de l'image, tandis que les moyens de visualisation comprennent des moyens de visualiser en surbrillance la portion de ligne qui correspond à la coïncidence desdites adresses.

## Patentansprüche

1. Verfahren zur Gewebekennzeichnung, das darin besteht, Ultraschallimpulse mit hoher Trägerfrequenz auf das zu kennzeichnende biologische Gewebe zu übertragen, die im Gewebe reflektierten elektrischen Hochfrequenzsignale zu speichern und die Prüfung der vom übertragenen und reflektierten Frequenzspektrum erfahrenen Deformationen durchzuführen, gekennzeichnet durch eine Frequenzumsetzung, die das reflektierte Spektrum in den Bereich der hörbaren Frequenzen zurückbringt, und durch das Abhören des transponierten Spektrums.

2. Vorrichtung zur Anwendung des Verfahrens nach Anspruch 1, mit Mitteln (1-2-3), um Ultraschallimpulse mit hoher Trägerfrequenz auf das Gewebe zu übertragen, Mitteln (1-4), die die Echos empfangen und sie in elektrische Signale hoher Frequenz umwandeln und Mittel (5-6-10-11-14), um die elektrischen Signale mit einer Testfrequenz zu speichern, die ausreicht, damit die Hochfrequenzinformation, die sie enthalten, korrekt gespeichert wird, gekennzeichnet durch Mittel (11 bis 19) zum Lesen der gespeicherten Information mit einer Kadenz, die niedriger als die Testfrequenz und derart ist, daß das Hochfrequenzspektrum in den Bereich der hörbaren Frequenzen transponiert wird, und durch Mittel (7-8-9), um das transponierte Spektrum in ein Schallsignal zu verwandeln.

3. Vorrichtung nach Anspruch 2, die weiter ein Organ (28) zum Aufspüren der elektrischen Signale hoher Frequenz, Mittel (20-21-24-25-26) zum Speichern der aufgespürten Signale, die einem vollständigen Bild eines Gewebebereichs entsprechen, das durch Abtasten des übertragenen Ultraschallbündels erhalten wird und Mittel (22-23-24) zur Sichtbarmachung des gespeicherten Bilds aufweist, dadurch gekennzeichnet, daß die Mittel (5-6-11-14) zum Speichern der Hochfrequenzsignale so aufgebaut sind, daß sie die einer Abtastzeile entsprechende Information speichern, daß die Mittel (11 bis 19) zum Lesen der gespeicherten Information so aufgebaut sind, daß sie einen ausgewählten Adressierbereich lesen, dessen regulierbare Breite und Position einem bestimmten Abschnitt der Abtastzeile entsprechen, und daß die Mittel (20-21-24-25-26) zur Speicherung eines vollständigen Bilds einen Komparator (27) der Adressen des ausgewählten Bereichs und der Leseadressen des Bildes aufweisen, während die Sichtbarmachungsmittel Mittel zum Sichtbarmachen in Überhelligkeit des Zeilenabschnitts enthalten, der der Koinzidenz dieser Adressen entspricht.

**Claims**

1. A tissue characterization method consisting in transmitting ultrasonic pulses with high carrier frequency to the biological tissue to be characterized, storing the high frequency electric signals reflected from within the tissue and examining the deformations undergone by the transmitted and reflected frequency spectrum, characterized by a frequency transposition which brings the reflected spectrum back into the range of audible frequencies and by listening to the transposed spectrum.

2. A device for implementing the method as claimed in claim 1, comprising means (1-2-3) for transmitting high carrier frequency ultrasonic pulses to the tissue, means (1-4) for receiving and converting the echos into high frequency electric signals and means (5-6-10-11-14) for storing said electric signals with a sampling frequency sufficient for the high frequency information which they contain to be correctly recorded, characterized by means (11-19) for reading the stored information at a rate less than the sampling frequency and such that the high frequency spectrum is transposed into the range of audible frequencies and means (7-8-9) for converting the transposed spectrum into a sound signal.

3. The device as claimed in claim 2, further comprising a member (28) for detecting said high frequency electric signals, means (20-21-24-25-26) for storing the detected signals corresponding to a complete image of a region of a tissue obtained by scanning of the transmitted ultrasonic beam and means (22-23-24) for displaying the stored image, characterized in that said means (5-6-11-14) for storing the high frequency signals are adapted for storing the information corresponding to a scanning line, said means (11-19) for reading the stored information are arranged for reading a selected addressing zone of adjustable width are adapted for storing the information corresponding to a scanning line, said means (11-19) for reading the stored information are arranged for reading a selected addressing zone of adjustable width and position corresponding to a given portion of the scanning line, and said means (20-21-24-25-26) for storing a complete image comprise a comparator (27) for comparing the addresses of said selected zone and the reading addresses of the image, whereas the display means comprise means for displaying with overbrilliance the line portion which corresponds to the coincidence of said addresses.